# EUROPEAN PATENT APPLICATION

(11) **EP 1 972 221 A2**
(43) Date of publication of application: **24.09.2008**
(21) Application number: 08153025.5
(22) Date of filing: 19.03.2008
(51) Int. Cl.: A43B 5/14, B62M 3/08

(54) **System including bicycle shoes easily attachable to and detachable from pedal**

(30) Priority: 21.03.2007 TW 96109789; 29.09.2007 TW 96136604
(71) Applicant: Swain, Bernard M., 72336 Balingen (DE)
(72) Inventor: Swain, Bernard M., 72336 Balingen (DE)
(74) Representative: Viering, Jentschura & Partner

(57) **Abstract**

A system includes a pedal (1) having a shaft, a first magnetic ring (31) and a second magnetic ring (32) mounted around the shaft (10). A shoe (2) includes a sole (201), a first magnetic block (203) and a second magnetic block (204) attached to the sole (201). The sole is turnable on the pedal between a first position for retaining the shoe (2) to the pedal (1) and a second position for releasing the shoe (2) from the pedal (1).

## Description

### BACKGROUND OF THE INVENTION

### Field of the Invention

The present invention relates to a bicycle, in particular to a system which includes a pedal and a shoe that can be easily attached to and detached from the pedal.

### Description of the Related Art

A bicycle is generally provided with two pedals on which a rider sets his or her feet. To make sure that the riders tread the pedals properly, there are devices for attaching shoes to the pedals. For example, Taiwanese Patent M291227 discloses a device 10 for attaching a shoe to a pedal 30. The device 10 includes a socket 11 and two cleats 12 and 13 formed on the flanks of the socket 11. A washer 14 is disposed in the socket 11. Two threaded bolts 15 are driven into two screw holes 21 defined in the sole 20 of the shoe, through the washer 14, and the socket 11. The cleats 12 and 13 can thereafter be engaged with the pedal 30. However, it is troublesome to attach the cleats 12 and 13 to the sole 20 with the threaded bolts 15. Moreover, the engagement of the cleats 12 and 13 with the pedal 30 is not firm.

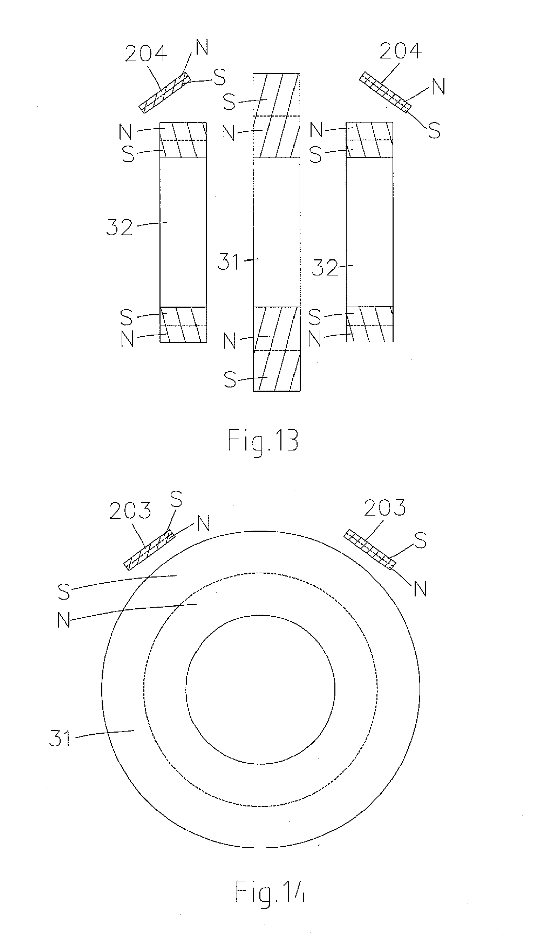

Furthermore, US Patent No. 5325738 entitled locking mechanism for a clipless bicycle pedal discloses a mechanism having a pedal 200 and a cleat 250 for attaching to a sole of a shoe. The pedal 200 includes a block 202, a neck 210 formed on the block 202 and a head 208 provided on the neck 210 having two tabs 211 and 212. The cleat 250 includes a plate 252, two rails 254 formed on the bottom of the plate 252, a stop 264 formed on the bottom of the plate 252 and a spring tab 266 formed on the bottom of the plate 252. The cleat 250 can be moved to the pedal 200 as shown in Fig. 13a and be rotated so that the tabs 211 and 212 are engaged with the rails 254 and that the neck 210 is restrained between the stop 264 and spring tab 266 as shown in Fig. 13b. However, it is troublesome to attach the cleat 250 to the sole as the cleat 250 is connected to the sole by a fastener, and the fastener is driven with a wrench. Moreover, it is difficult to lay the shoe on the ground because of the cleat 250. Yet, it is troublesome to detach the cleat 250 from the sole by releasing the fastener with the wrench.

The present invention is therefore intended to obviate or at least alleviate the problems encountered in prior art.

### Summary of the Invention

Accordingly, it is therefore an objective of the present invention to provide a system that overcomes the aforementioned problems. In one embodiment, the system includes a pedal having a shaft, a first magnetic ring disposed around the shaft and having an internal region and an external region, with the internal region being a south pole and the external region being a north pole, and with the internal region closer to the shaft than the external region, and two second magnetic rings disposed around the shaft, with each second magnetic ring having an internal region and an external region, with the internal region being a north pole and the external region being a south pole, and with the internal region closer to the shaft than the external region. The pedal further includes a holder for accommodating the first and the second magnetic rings. The holder may constitute of two shells, a tube and a cover or take the form of a one-piece element.

Optionally, the holder is of a shape being circular or elliptical.

A shoe includes a sole, two first magnetic blocks attached to the sole, with each first magnetic block having an upper end and a lower end, with the upper end being a north pole and the lower end being a south pole, and two second magnetic blocks attached to the sole, with each second magnetic block having an upper end and a lower end, with the upper end being a south pole and the lower end being a north pole.

The sole is selectively moveable on the pedal between a first position and a second position. In the first position, two first magnetic blocks are substantially in a plane where the first magnetic ring extends, and two second magnetic blocks are substantially in planes where two second magnetic rings extend, respectively, in order to secure the sole to the pedal. In the second position, two first magnetic blocks are moved further from the plane where the first magnetic ring extends, and two second magnetic blocks are moved further from the planes where the second magnetic rings extend, respectively, in order to expel the sole from the pedal.

In another embodiment, the poles of the first and second magnetic rings are switched, and accordingly the poles of the first and second magnetic blocks are switched.

In yet another embodiment, the pedal includes a second magnetic ring rather than two.

In a further embodiment, the system includes a clipping device attached to the sole for enhanced attachment with the pedal and for adaptability with the most popular existing pedal system.

Other advantages and features of this invention will become apparent from the following description referring to the attached drawings.

### BRIEF DESCRIPTION OF THE DRAWINGS

Fig. 1 is a perspective view of a system including a pedal and a shoe easily attachable to and detachable from the pedal according to the first embodiment of the present invention.
Fig. 2 is an exploded view of the system of Fig. 1.
Fig. 3 is an exploded view of the pedal.
Fig. 4 is a cross-sectional view of the system taken along line 4-4 of Fig. 1.
Fig. 5 is an enlarged partial view of the system shown in Fig. 4.
Fig. 6 is a top view of the system of Fig. 1.
Fig. 7 is an enlarged, simplified cross-sectional view of the system taken along line 7-7 of Fig. 6.
Fig. 8 is an enlarged, simplified cross-sectional view of the system taken along line 8-8 of Fig. 6.
Fig. 9 is a top view of the system of Fig. 1, of which the system enables relative movement between the sole and the pedal.
Fig. 10 is a side view of the system of Fig. 1, of which the system enables relative movement between the sole and the pedal.
Fig. 11 is a top view of the system in another position than shown in Fig. 6.
Fig. 12 is an enlarged, simplified cross-sectional view of the system taken along line 12-12 of Fig. 11.
Fig. 13 is an enlarged, simplified cross-sectional view of a system including a pedal and a shoe easily attachable to and detachable from the pedal according to a second embodiment of the present invention.
Fig. 14 is another cross-sectional view of the system of Fig. 13.
Fig. 15 is a top view of a system including a pedal and a shoe easily attachable to and detachable from the pedal according to a third embodiment of the present invention.
Fig. 16 is a cross-sectional view of the system taken along line 16-16 of Fig. 15.
Fig. 17 is an enlarged, partial cross-sectional view of a system including a pedal and a shoe easily attachable to and detachable from the pedal according to a fourth embodiment of the present invention.
Fig. 18 is an enlarged, partial cross-sectional view of a system including a pedal and a shoe easily attachable to and detachable from the pedal according to a fifth embodiment of the present invention.
Fig. 19 is an enlarged, simplified cross-sectional view of the system of Fig. 18.
Fig. 20 is an enlarged, simplified cross-sectional view of the system in another position than shown in Fig. 19.
Fig. 21 is a perspective view of a system including a pedal and a shoe easily attachable to and detachable from the pedal according to a sixth embodiment of the present invention.
Fig. 22 is an exploded view of the system shown of Fig. 21.
Fig. 23 is a cross-sectional view of the system taken along line 23-23 of Fig. 21.
Fig. 24 is a cross-sectional view of the system taken along line 24-24 of Fig. 21.
Fig. 25 is a cross-sectional view of the system taken along line 25-25 of Fig. 23.
Fig. 26 is a cross-sectional view of the system in another position than shown in Fig. 25.

### DETAILED DESCRIPTION OF THE PREFERRED EMBODIMENTS

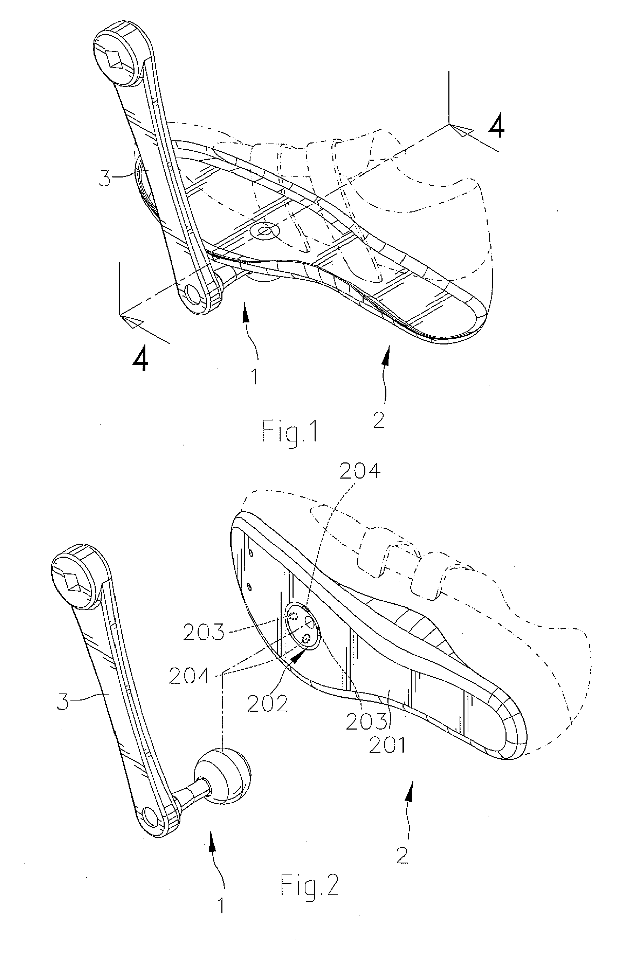

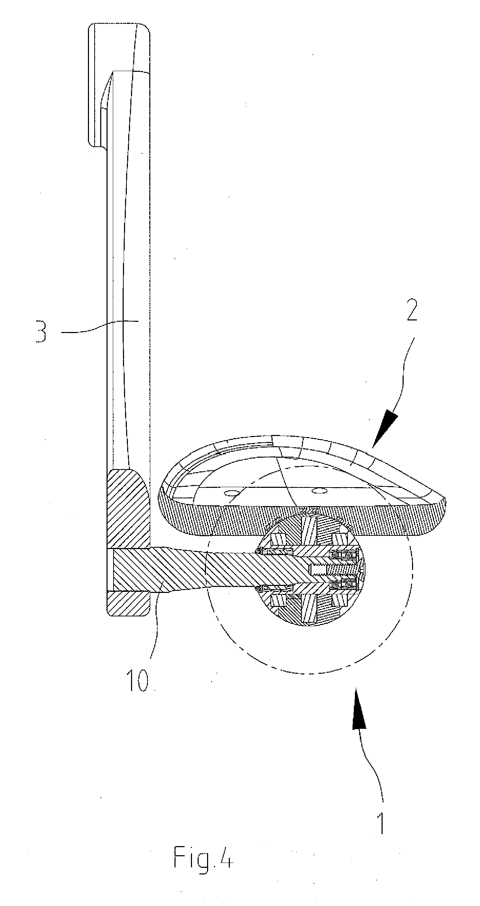

Referring to Figs. 1 through 12, a system according to a first embodiment of the present invention includes a pedal 1 and a shoe 2 that is easily attachable to and detachable from the pedal 1.

The shoe 2 includes a sole 201, a cavity 202 defined in the sole 201, two first magnetic blocks 203 disposed in the cavity 202 of the sole 201, and two second magnetic blocks 204 disposed in the cavity 202 of the sole 201. The cavity 202 preferably takes the shape of a dome. The first magnetic blocks 203 are preferably aligned to each other, and the second magnetic blocks 204 are preferably aligned to each other, and the first and second magnetic blocks 203 and 204 are alternatively and evenly located in the cavity 202. Furthermore, the direction of alignment of the second magnetic blocks 204 accords to a line 4-4 seen in Fig. 1, and the direction of alignment of first magnetic blocks 203 are substantially perpendicular to that.

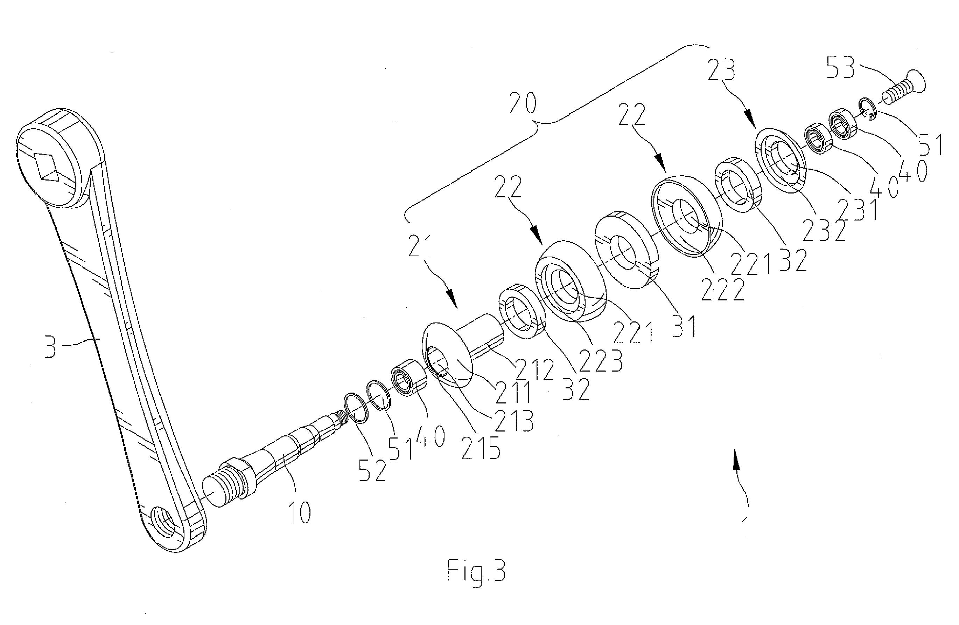

As seen in Fig. 3, the pedal 1 includes a shaft 10 connectable to a crank 3 for a bicycle, a first magnetic ring 31, two second magnetic rings 32, a holder 20 for holding the magnetic rings 31 and 32, three bearings 40 for rotationally supporting the holder 20 on the shaft 10, two C-clips 51, a ring 52 and a threaded bolt 53 for retaining the holder 20 on the shaft 10.

The holder 20 includes two shells 22, a tube 21 and a cover 23. Each shell 22 includes a first space 222, and the first magnetic ring 31 is disposed in the first spaces 222 of the two shells 22. Each shell 22 also includes a second space 223 in which one of second magnetic rings 32 is partially received, and an aperture 221 in which the shaft 10 is engaged.

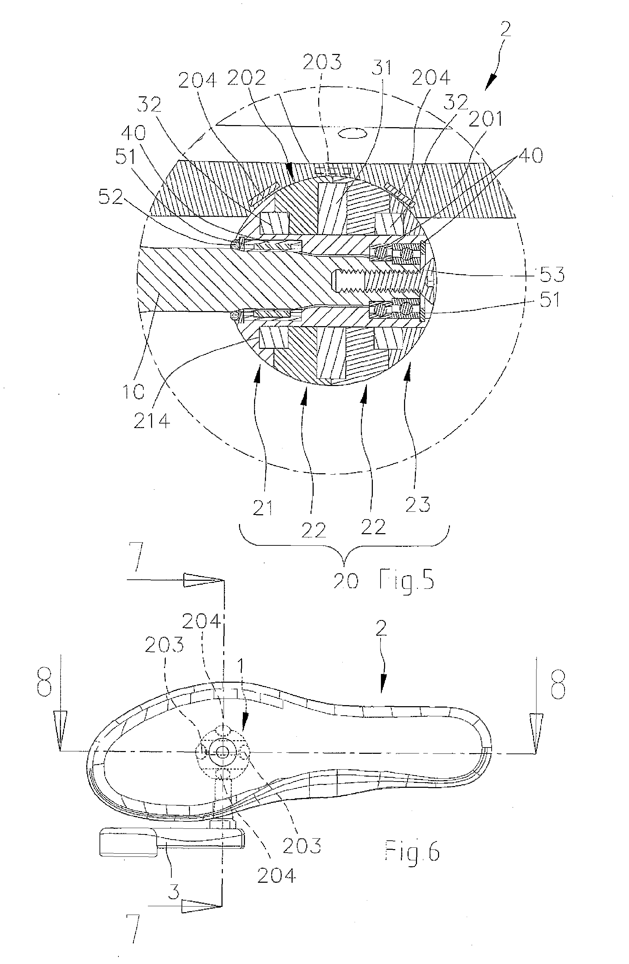

The tube 21 includes a neck 212, an enlarged head 211 formed at an end of the neck 212, and a tunnel 213 defined through the head 211 and neck 212. An annular groove 214 is defined in a side of the head 211 for partially receiving one of the second magnetic rings 32, as seen in Fig. 5. Two annular grooves 215 are defined in the wall of the tunnel 213. The neck 212 is inserted through the magnetic rings 31 and 32 and shells 22. The tube 21 is provided around the shaft 10. The bearings 40 are disposed in the tunnel 213, i.e., between the tube 21 and shaft 10. The C-clips 51 are fit in the annular grooves 215 to restrain the bearings 40. The ring 52 is provided around the shaft 10 against the C-clip 51.

The cover 23 includes a space 232 in which the other second magnetic ring 32 is partially received, and an aperture 231 in which the neck 212 is engaged.

The threaded bolt 53 is driven into a screw hole defined in an end of the shaft 10.

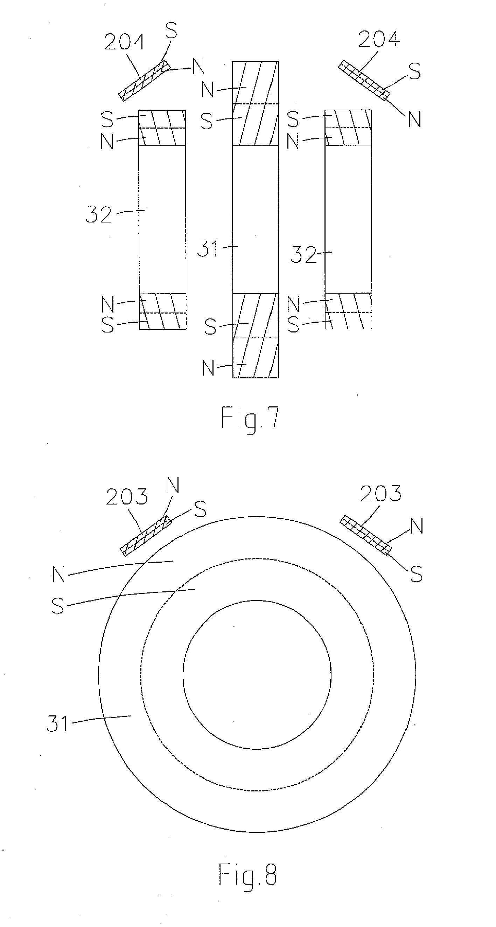

Referring to Figs. 7 and 8, the first magnetic ring 31 includes an internal region and an external region, with the internal region being a south pole S and the external region being a north pole N. Each of the second magnetic rings 32 includes an internal region and an external region, with the internal region being a north pole N and the external region being a south pole S. Each of first magnetic blocks 203 includes an upper end and a lower end, with the upper end being a north pole and the lower end being a south pole. Each of the second magnetic blocks 204 includes an upper end and a lower end, with the upper end being a south pole S and the lower end being a north pole N.

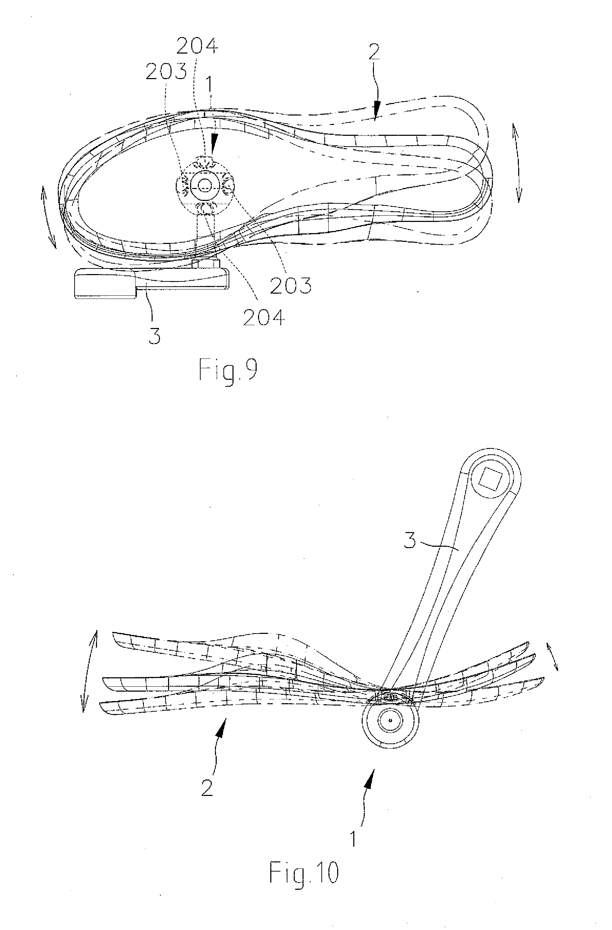

When the shoe 2 is laid on the pedal 1 as shown in Figs. 6-8, the first magnetic blocks 203 are substantially in a plane where the first magnetic ring 31 extends with respect to its center, and two second magnetic blocks 204 are substantially in planes where two second magnetic rings 32 extend with respect to their centers, respectively. Additionally, the south poles S of the first magnetic blocks 203 are close to the north pole S of the first magnetic ring 31, and the north poles N of the second magnetic blocks 204 close to the south poles S of the respective second magnetic rings 32. Thus, the magnetic attraction of the first magnetic blocks 203 to the first magnetic ring 31 and the magnetic attraction of the second magnetic blocks 204 to the respective second magnetic rings 32 enable the shoe 2 to be firmly retained on the pedal 1, but allows the sole 2 to be moveable relative to the pedal 1, as seen in Figs. 9 and 10.

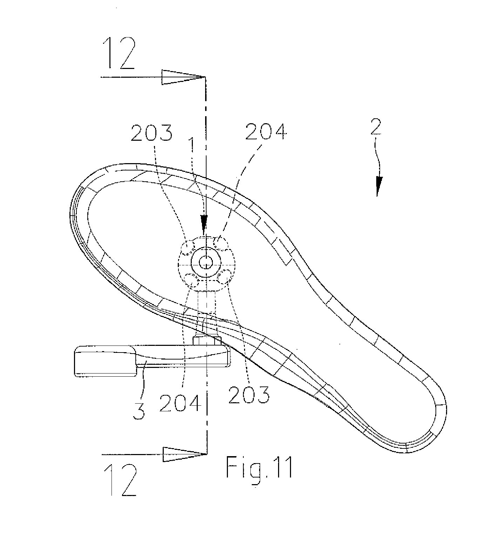

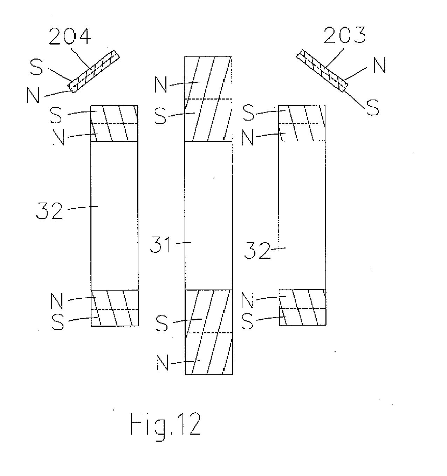

To detach the shoe 2 from the pedal 1, a rider turns the shoe 2 to a position with respect to the pedal 1, as seen in Fig. 11. The pivotal of the shoe 2 on the pedal 1 is smooth since the holder 20 is rotationally disposed in the cavity 202 and since the holder 20 takes the form of a spherical shape. As also seen in Fig. 12, the first magnetic blocks 203 are moved further from the plane where the first magnetic ring 31 extends with respect to its center, and the second magnetic blocks 204 are moved further from the planes where the respective second magnetic rings extend with respect to its center.

The south poles S of the first magnetic blocks 203 are moved farther from the north pole N of the first magnetic ring 31, thus reducing the magnetic attraction of the magnetic blocks 203 to the first magnetic ring 31. The south poles S of the magnetic blocks 203 are then closer to the south poles S of the second magnetic rings 32, thus increasing the magnetic repulsion of the magnetic blocks 203 from the second magnetic rings 32.

The north poles N of the second magnetic blocks 204 are moved farther from the south poles S of the respective second magnetic rings 32, thus reducing the magnetic attraction of the second magnetic blocks 204 to the second magnetic rings 32. The north poles N of the second magnetic blocks 204 are then closer to the north pole N of the first magnetic ring 31, thus increasing the magnetic repulsion of the second magnetic blocks 204 from the first magnetic ring 31.

Referring to Figs. 13 and 14, there is shown a system according to a second embodiment of the present invention. The second embodiment is identical to the first embodiment except for a few things. Firstly, the internal region of each of the second magnetic rings 32 is switched to a south pole S and the external region is switched to a north pole N. Secondly, the upper end of each of the magnetic blocks 204 is switched to a north pole N and the lower end is switched to a south pole S. Thirdly, the internal region of the first magnetic ring 31 is switched to a north pole N and the external region is switched to a south pole S. Fourthly, the upper end of each of the magnetic blocks 203 is switched to a south pole N and the lower end is switched to a north pole N.

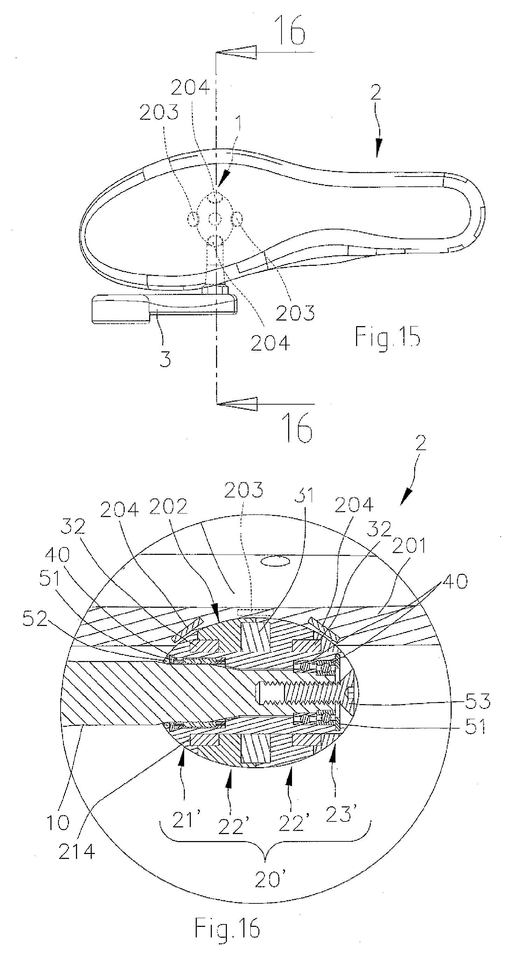

Referring to Figs. 15 and 16, there is shown a system according to a third embodiment of the present invention. The third embodiment is identical to the first embodiment except for that a holder 20' including two shells 22', a tube 21' and a cover 23', which makes the holder 20' to take the form of an elliptical shape, like a rugby or an olive.

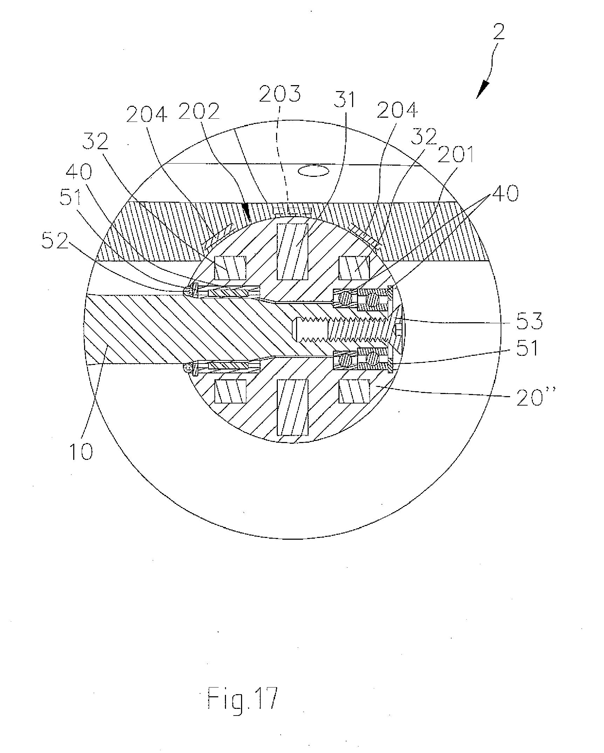

Referring to Fig. 17, there is shown a system according to a fourth embodiment of the present invention. The fourth embodiment is like the first embodiment except for including a holder 20" which is a one-piece element made by molding for example. The first and second magnetic rings 31 and 32 are embedded in the holder 20'.

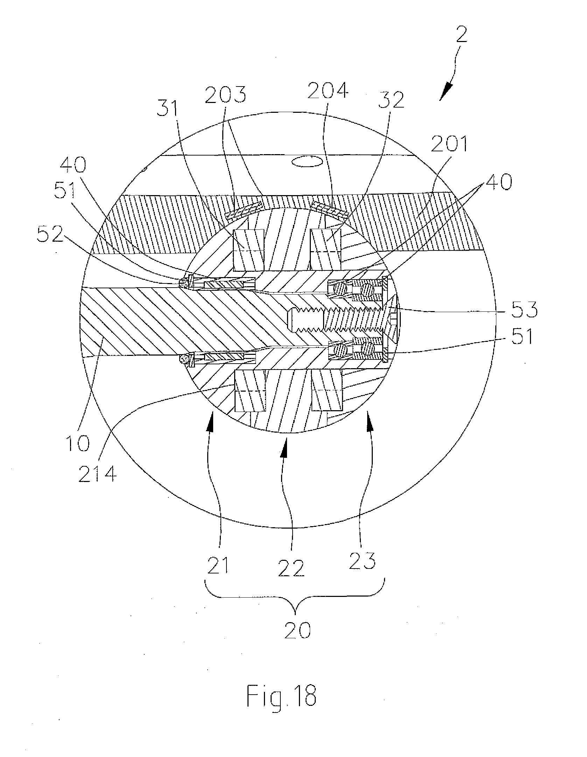

Referring to Figs. 18 through 20, there is shown a system according to a fifth embodiment of the present invention. The fifth embodiment is identical to the first embodiment except for several things. Firstly, the shells 22 are replaced with a shell 24. Secondly, one second magnetic ring 32 is omitted, i.e., only one first magnetic ring 31 and one second magnetic ring 32, are disposed in the holder 20. Additionally, the first magnetic ring 31 is disposed between the tube 21 and the shell 24, and the second magnetic ring 32 is disposed between the shell 24 and the cap 23.

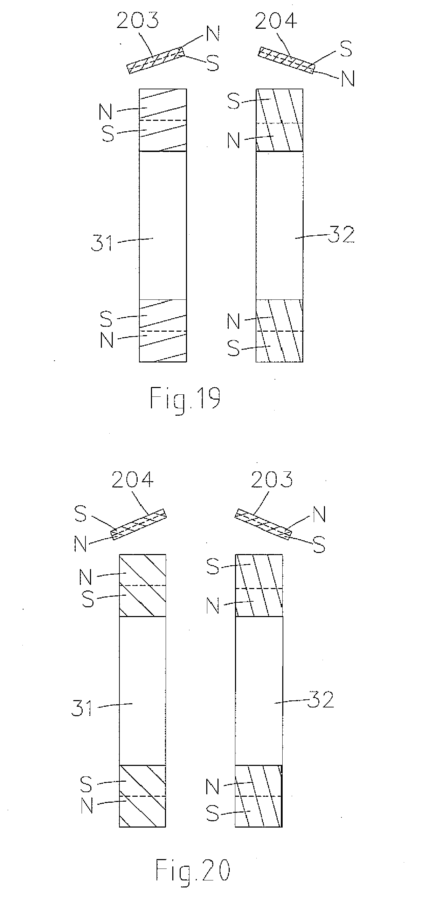

Fig. 19 shows when the shoe 2 is attached to the pedal 1, the first magnetic blocks 203 are substantially in a plane where the first magnetic ring 31 extends with respect to its center, the second magnetic block 204 is substantially in planes where the second magnetic ring 32 extends with respect to their center. Additionally, the south poles S of the first magnetic blocks 203 are close to the north pole S of the first magnetic ring 31, and the north poles N of the second magnetic blocks 204 close to the south poles S of the respective second magnetic rings 32.

Fig. 20 shows when the shoe 2 is to detached from the pedal 1, the south pole S of the first magnetic block 203 is moved farther from the north pole N of the first magnetic ring 31, and the south poles S of the magnetic block 203 is then closer to the south pole S of the second magnetic ring 32. The north pole N of the second magnetic block 204 is moved farther from the south pole S of the second magnetic ring 32, and the north poles N of the second magnetic block 204 is then closer to the north pole N of the first magnetic ring 31.

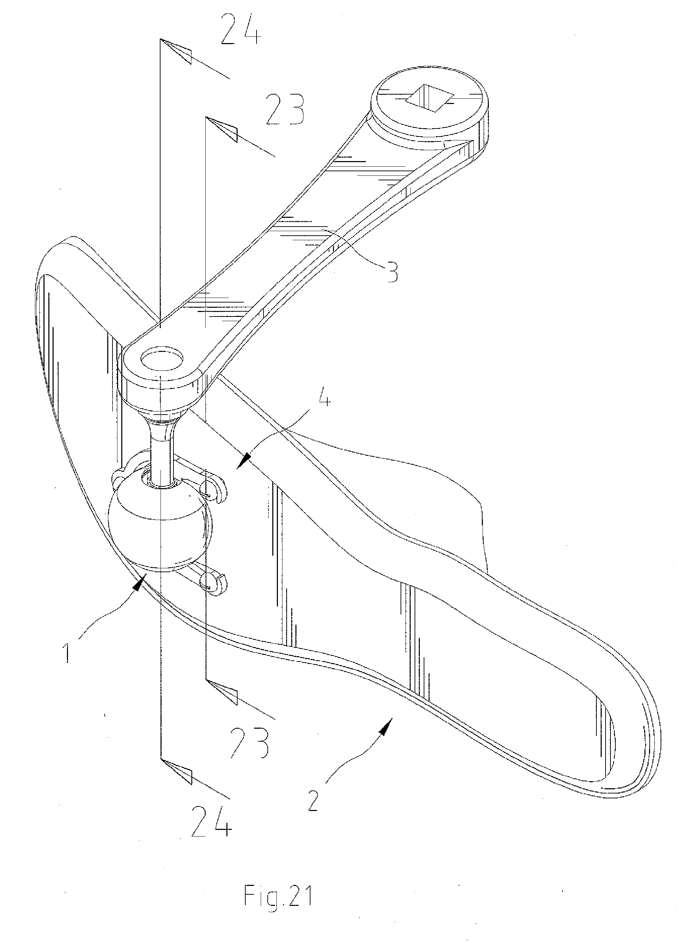

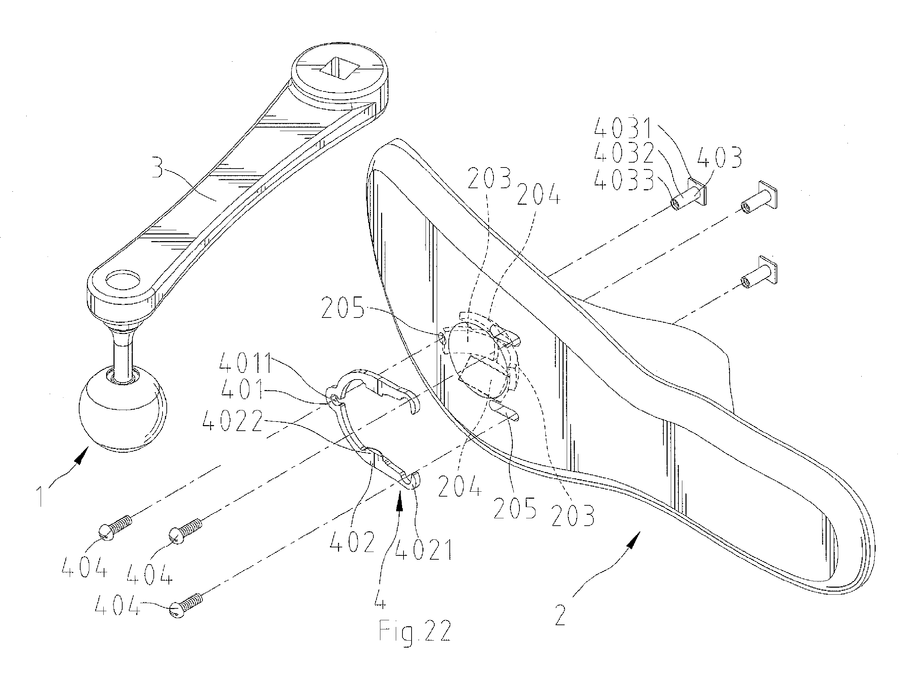

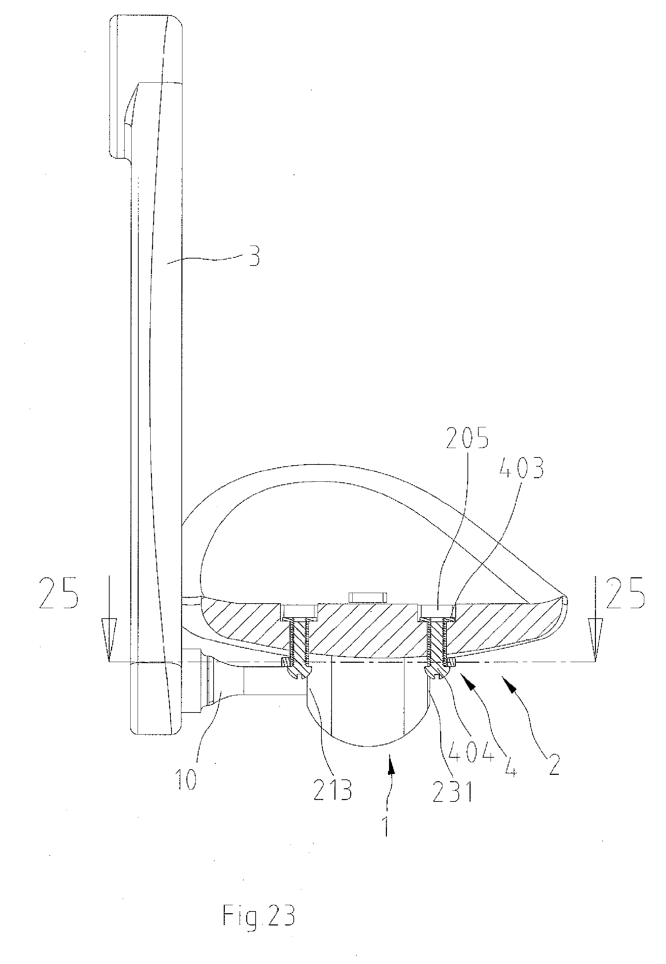

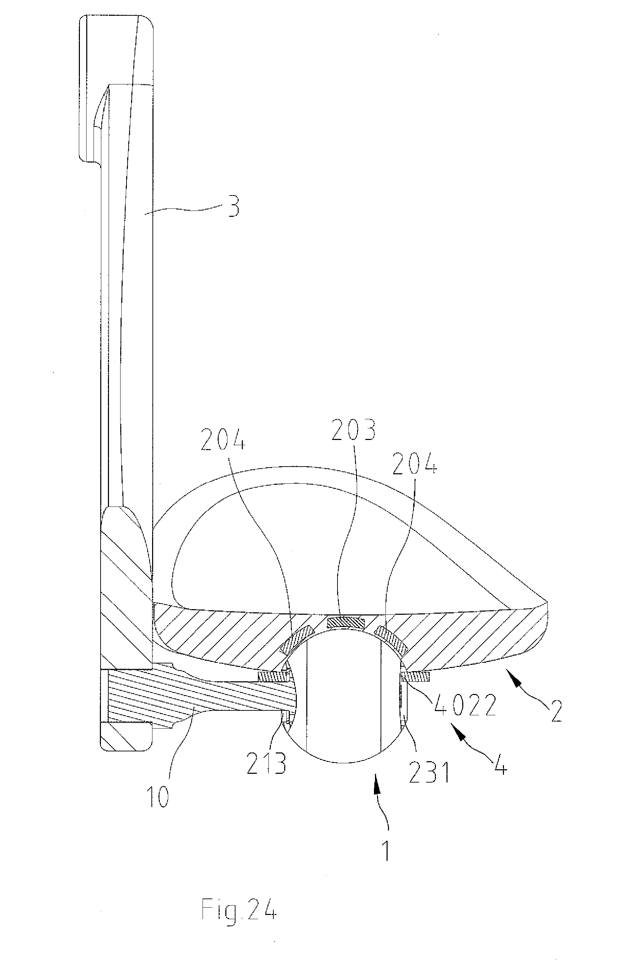

Referring to Figs. 21 through 26, there is shown a system according to a sixth embodiment of the present invention. The sixth embodiment is identical to the first embodiment except for the sole 201 including a clipping device 4 attached thereto for not only enhanced attachment between the pedal 1 and the shoe 2 but also adaptability with the most popular existing pedal systems. The clipping device 4 is substantially U-shaped and includes a first hooking end 401 and two legs 402 symmetrically extended therefrom, and at the terminal end of each leg 402 is defined a second hooking end 4021. The first hooking end 401 includes a detent hole 4011 adapted to be aligned with a countersink hole 205. A connector 403 for connecting the first hooking end 401 to the sole 201 of the shoe 2 can therefore be inserted into the countersink hole 205 and the detent hole 4011 respectively and coupled with a fastener 404. Preferably, the countersink hole 205 is circular. Each second hooking end 4021 also has a detent hole (not numbered) adapted to be aligned with another countersink hole 205, and a connector 403 inserted through the detent hole and the countersink hole 205 cooperates with a fastener 404 for connecting the second hooking end 4021 to the sole 201 of the shoe 2. Preferably, the countersink hole 205 is slotted. Furthermore, the arrangement of the three countersink holes 205 is adapted for cooperation with the most popular existing pedal system.

The connector 403 received in each related countersink hole 205 includes a head portion 4031 and a body portion 4032, and the body portion 4032 in which a threaded portion 4033 is defined thereof for engaging with the fastener 4033. Preferably, the head portion 4031 is plated and has a perimeter larger than that of the body portion 4032. Also, a portion of the countersink hole 205 receiving the head portion 4031 has a depth larger than a height of the head portion 4031. Thus, the head portion 4031 received in the portion of the respective countersink hole does not extend out therefrom.

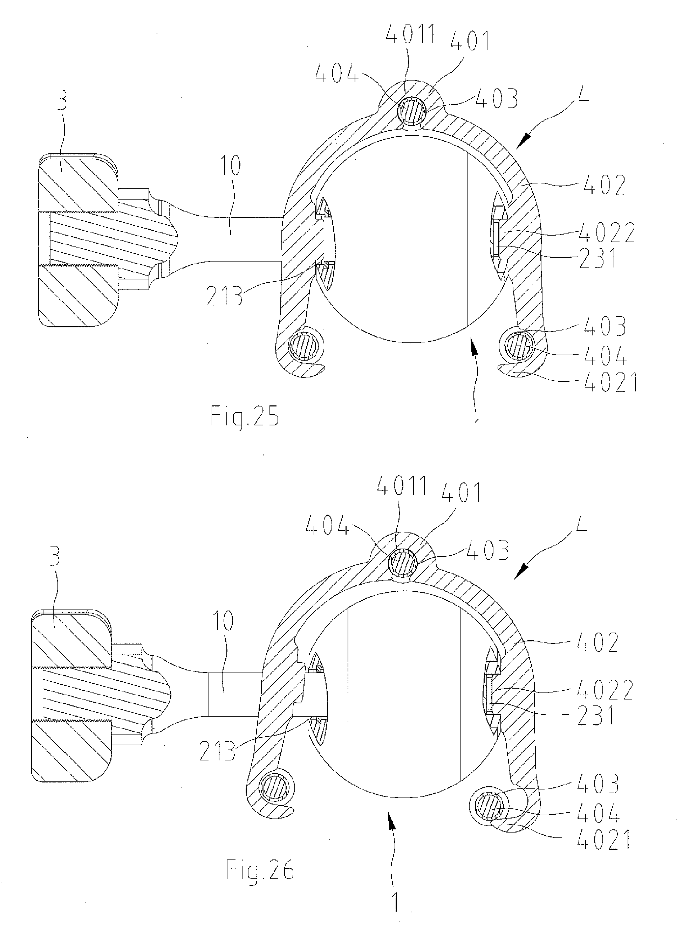

Also, as best shown in Fig. 25, the leg 402 of the clipping device 4 includes a protrusion 4022 formed intermediate the first and second hooking ends 401, 4021 for engagement with the holder 20, and one of the protrusions 4022 is adapted to be inserted into the tunnel 213 of the tube 21, the other is adapted to be inserted into the aperture 231 of the cover 23 respectively. Accordingly, enhanced attachment between the pedal 1 and the shoe 2 is achieved. In addition, as the rider pivots the shoe 2 with respect to the pedal 1 as shown in Fig. 10, one of the legs 402 of the clipping device 4 will be biased away from the holder 20 so that the clipping device can disengage from the holder 20.

The system of the present invention exhibits several advantages. Firstly, the shoe can be laid on the ground since the sole is substantially flat except the cavity.

Secondly, the shoe can firmly be retained on and easily removed from the pedal.

Thirdly, the shoe can firmly be retained on the pedal no matter how the shoe is tilted on the pedal.

Fourthly, the rotating of the crank by the treading of the pedal is firm and smooth since the holder is rotationally provided on the shaft.

Fifthly, the clipping device is provided for enhanced attachment between the pedal and the shoe and adaptability with the most popular existing pedal system.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A system comprising:
a pedal (1) connectable to a crank (3) for a bicycle;
a shoe (2) comprising a sole (201) turnable on the pedal;
**characterized by**
a shaft (10) mounted to the pedal, a first magnetic ring (31) and a second magnetic ring (32) mounted around the shaft (10), a first magnetic block (203) and a second magnetic block (204) attached to the sole (201), the sole (201) is turnable on the pedal between a first position and a second position; wherein in the first position, the first magnetic block (203) and the first magnetic ring (31) are near and have magnetic attraction therebetween, and the second magnetic block (204) and the second magnetic ring (32) are near and have magnetic attraction therebetween; and wherein in the second position, the first magnetic block (203) is moved apart from the first magnetic ring (31) and then close to the second magnetic ring and the first magnetic block and the second magnetic ring have magnetic repulsion therebetween, and the second magnetic block (204) is moved apart from the second magnetic ring (32) and then close to the first magnetic ring and the second magnetic block (204) and the second magnetic ring (32) have magnetic repulsion therebetween.

2. The system according to claim 1 wherein the first and the second magnetic rings (31, 32) each comprise an internal region and an external region, with the internal region and external region having different magnetic poles, and wherein the first and second magnetic blocks (203) comprise an upper end and a lower end, with the upper end and the lower end having different magnetic poles.

3. The system according to claim 2 wherein the pedal (1) comprises a holder (20, 20', 20") for accommodating the first (31) and second (32) magnetic rings on the shaft (10).

4. The system according to claim 3 wherein the holder (20") is a one-piece element.

5. The system according to claim 3 wherein the holder (20, 20') comprises a tube (21) including ahead (211) and a neck (212) extended from the head (211) on which the magnetic rings (31, 32) can be mounted, a shell (22) provided on the neck (212), and a cover (23) provided on the neck (212), with the first magnetic ring (31) sandwiched between the tube and the shell, and with the second magnetic ring (32) sandwiched between the shell and the cover.

6. The system according to claim 5 wherein the holder (20) takes the form of a spherical shape.

7. The system according to claim 5 wherein the holder (20') takes the form of an elliptical shape.

8. The system according to claim 3 further comprising a bearing (40) for rotationally supporting the holder (20) around the shaft (10).

9. The system according to claim 6 or 7 wherein the sole (201) comprises a cavity (202) for receiving the holder (20).

10. The system according to claim 9 wherein the cavity (202) takes the shape of a dome.

11. The system according to claim 10, with the system comprising two first magnetic blocks (203) and two second magnetic blocks (204), with the first magnetic blocks (203) disposed in alignment with each other, with the second magnetic blocks (204) disposed in alignment with each other, with the first and second magnetic blocks (203 and 204) alternatively and evenly located in the cavity (202), and with the direction of alignment of first magnetic blocks (203) in substantially perpendicular relation with the direction of alignment of the second magnetic blocks (204).

12. The system according to claim 11 with the system comprising one first magnetic ring (31) and two second magnetic rings (32).

13. The system according to claim 11 with the system comprising one first magnetic ring (31) and one second magnetic ring (32).

14. The system according to claim 1 further comprising a clipping device (4) attached to the shoe (2), with the clipping device (4) engagable with the holder in the first position of the sole (201), and with the clipping device disengaged from the holder in the second position of the sole (201).

15. The system according to claim 14 wherein the clipping device (4) comprises a first hooking end (401), two second hooking ends (4021) extended therefrom, with the first and each second hooking end (401, 4021) including a detent hole (4011) being adapted to be aligned with a countersink hole (205) defined on the sole (201), the clipping device (4) further comprises a connector (403) engagable in the countersink hole (205) and related detent hole (4011).
